# EUROPÄISCHE PATENTANMELDUNG

(11) **EP 2 339 310 A2**
(43) Veröffentlichungstag der Anmeldung: **29.06.2011**
(21) Anmeldenummer: 10014881.6
(22) Anmeldetag: 23.11.2010
(51) Int. Cl.: G01L 5/24

(54) **Verbindungsbauteil mit integriertem Ultraschallsensor und Herstellungsverfahren**

(30) Priorität: 22.12.2009 DE 102009060441
(71) Anmelder: Intellifast GmbH, 67346 Speyer (DE)
(72) Erfinder: Höring, Gert, 76185 Karlsruhe (DE); Zendehroud, Jafar, 34125 Kassel (DE)
(74) Vertreter: Hörschler, Wolfram Johannes

(57) **Zusammenfassung**

Die Erfindung bezieht sich auf ein Verbindungsbauteil (1) mit integriertem Ultraschallsensor (5), wobei der Ultraschallsensor einen mindestens zwei Schichten (21, 23) umfassenden Schichtaufbau (20) mit einer Elektrodenschicht (21) und mindestens einer Schicht (23) aus einem Material mit piezoelektrischen Eigenschaften aufweist. Die mindestens eine Elektrodenschicht (21) und die mindestens eine Schicht (23) aus einem Material mit piezoelektrischen Eigenschaften sind an einem frei zugänglichen Ende (25, 27) des Verbindungsbauteiles (1) angeordnet. In der Elektrodenschicht (21) sind Strukturen (40, 46, 50) zur Erzeugung von Elektroden durch ausgelaserte Bereiche (30, 31) ausgebildet.

## Beschreibung

Aus DE 42 25 035 A1 sowie DE 42 32 254 A1 sind Ultraschallprüfverfahren bekannt.

DE 10 2004 038 638 bezieht sich auf ein Verbindungsbauteil, in dessen Kopfbereich sich ein Ultraschallsensor befindet, dessen Aufbau als Schichtaufbau ausgebildet ist.

Als Ultraschalltransducer, die auch als Ultraschallsensoren bezeichnet werden, kommen heute z.B. aufgeklebte Sensoren mit PVDF-Folien oder aufgeklebte Sensoren aus Keramikmaterial zum Einsatz. Die mit PVDF-Folien ausgeführten Ultraschallsensoren sind sehr empfindlich und werden z.B. auf Schraubenköpfe von als Schrauben ausgebildeten Verbindungsbauteilen aufgebracht. Das Aufbringen und Fixieren an einem Schraubenkopf erfolgt in der Regel über eine Kleberschicht. PVDF-Folien haben den Nachteil, dass diese nicht temperaturbeständig sind. Ab einer Temperatur von ca. 70 °C tritt in der PVDF-Folie ein Alterungsprozess ein, der im Extremfall zur Auflösung der PVDF-Folie führen kann. Das grundsätzliche Problem bei PVDF-Folien ist die Ablösung der Folie über die Betriebszeit gesehen bzw. eine Teilablösung des Folienmaterials, durch Nachlassen der Haftkraft des Klebers. Wird nun die Vorspannkraft oder die Spannkraft eines schraubenförmig ausgebildeten Verbindungsbauteiles mit Hilfe eines Ultraschallsensors gemessen, der aus PVDF-Folie oder Piezokeramik gefertigt ist, so sind die z.B. auftretenden Teilablösungen aufgrund hoher Temperaturbeanspruchungen unterhalb des Sensors nicht sichtbar. Aufgrund der Teilablösungen und der unbekannten lokalen Lage der Teilablösungen wird bei einer Ultraschallmessung mit einem derart vorgeschädigten Ultraschallsensor ein falsches Messergebnis erhalten, da die Signallaufzeiten aufgrund des durch die Teilablösungen verlängerten Weges des Ultraschallsignals verfälscht sind. Bei einer vollständigen Ablösung der PVDF-Folie oder der Piezokeramik ist im Extremfall eine Ultraschallmessung gar nicht mehr möglich. Die auftretenden Verfälschungen können zu erheblichen Fehlern frühren, die ein auf einer Laufzeitmessung eines Ultraschallsignals beruhendes Ergebnis verfälschen, wenn nicht gar unbrauchbar machen können.

Ferner ist bei Ultraschallmessungen der Einsatz eines Koppelgels bekannt, was jedoch für die Ermittlung einer Vorspannkraft in einem schraubenförmigen Verbindungsbauteil ungeeignet ist, da durch kleinste Unterschiede beim Positionieren des Prüfkopfs Ultraschallankopplungsvorlaufzeitendifferenzen entstehen, die größer sein können als die Messgröße selbst. Mit Ultraschallmessungen, bei denen ein Koppelgel eingesetzt wird, sind in der Regel die erforderlichen Genauigkeitsklassen nicht zu erreichen.

Bei einem Aufdampfverfahren zur Herstellung von Ultraschallsensoren werden üblicherweise drei Schritte durchlaufen. Zuerst wird auf die gereinigten in der Regel als Schrauben ausgebildeten Verbindungselemente auf eines der beiden Enden eine Piezoschicht aufgesputtert. Anstelle von Schrauben können auch andere Verbindungselemente wie z.B. Nieten oder Bolzen oder dergleichen mehr im Wege des Aufdampfverfahrens mit einer Piezoschicht versehen werden. In einem zweiten Beschichtungsschritt erfolgt das Aufbringen einer Schutzschicht, die die Piezoschicht vor Umwelteinflüssen schützen soll. Die Schutzschicht ist jedoch nicht unbedingt erforderlich. Bevor eine weitere Schicht, eine Metallisierungsschicht für die Elektroden der Sensoren, aufgedampft werden kann, werden die Verbindungsbauteile maskiert. Dies ist notwendig, um die für die elektrische Anregung der Sensoren erforderlichen Elektroden erzeugen zu können. Erst durch die Maskierung entsteht aus dem obenstehend beschriebenen Zwei- oder Dreischichtensystem mit Piezoschicht, optional einer Schutzschicht und mit einer Metallisierungsschicht ein funktionsfähiger Ultraschallsensor. Bei Verwendung geeigneter Materialien, insbesondere temperaturstabiler und umweltresistenter Piezomaterialien, kann auf das Aufbringen der Schutzschicht verzichtet werden, so dass statt des Dreischichtensystems ein Zweischichtensystem entsteht.

Derzeit erfolgt das Maskieren der Planseiten der Verbindungsbauteile auf manuellem Wege unter Verwendung von selbstklebender Polyimidfolie oder ausgestanzten magnetischen Masken, wobei letztere jedoch nur auf Bauteilen mit ferromagnetischen Eigenschaften haften. Der zeitliche und der damit verbundene finanzielle Aufwand für das manuell erfolgende Maskieren der Verbindungsbauteile ist erheblich. Außerdem birgt das auf manuellem Wege derzeit erfolgende Maskieren stets das Risiko, dass die Enden der Verbindungsbauteile so zum Beispiel Schrauben vor dem Aufdampfen der Elektrode partiell verunreinigt werden können, was zu Haftproblemen der Metallisierungsschicht führen kann. Des Weiteren ist das obenstehend beschriebene Maskierungsverfahren auf einfache Strukturen, so z.B. ringförmige Strukturen, beschränkt. Sobald komplexere Strukturen zu schaffen sind, stößt das manuelle Maskierungsverfahren an seine Grenzen.

### Darstellung der Erfindung

Angesichts der skizzierten Nachteile der Lösungen des Standes der Technik sowie des oben stehend aufgezeigten technischen Problems liegt der Erfindung die Aufgabe zugrunde, ein Verbindungsbauteil mit integriertem Ultraschallsensor auf automatischem Wege bzw. halbautomatisiert herzustellen.

Erfindungsgemäß wird vorgeschlagen, eine Struktur zur Erzeugung mindestens einer Elektrode nach einem erfolgten vollflächigen Beschichten einer zum Beispiel als Planfläche ausgeführten Seite eines Verbindungsbauteiles, wie z.B. einer Schraube, eines Bolzen, einer Niete oder dergleichen, mit einer piezoelektrischen Dünnschicht, einer Schutzschicht und einer Elektrodenschicht durch Auslasern herzustellen. Anstelle der Ausbildung einer Seite eines Verbindungsbauteiles als Planseite besteht auch die Möglichkeit, diese konvex oder konkav gewölbt auszugestalten, was abhängig vom Anwendungsfall ist. Im vorliegenden Zusammenhang handelt es sich bei dem Verbindungsbauteil z.B. um ein aus einem metallischen Werkstoff oder um ein aus einer Legierung metallischer Werkstoffe gefertigtes Bauteil. In diesem Falle stellt die Bauteilmasse eine Elektrode dar. An diesem metallischen Bauteil wird dem erfindungsgemäß vorgeschlagenen Verfahren folgend, mindestens eine Elektrode ausgebildet. Die erfindungsgemäß vorgeschlagene Lösung kann jedoch auch an Verbindungsbauteilen ausgeführt werden, die aus einem nichtmetallischen Material, so zum Beispiel einer Keramik, welche elektrisch nichtleitend ist, bestehen. Das Verbindungsbauteil ist zur Erzeugung der Bauteilmasse in einem ersten zusätzlichen Beschichtungsgang mit einer Metallisierung zu versehen, folgend von mindestens einer Schicht mit piezoelektrischen Eigenschaften, einer Schutzschicht und mindestens einer weiteren Metallisierung. Das Erzeugen der mindestens einen Elektrode erfolgt erfindungsgemäß auch an elektrisch nichtleitenden Verbindungsbauteilen durch Lasern. Im vorliegenden Zusammenhang sei der Vollständigkeit halber auch darauf hingewiesen, dass es sich bei den Verbindungsbauteilen, seien sie aus metallischen Material, aus nichtmetallischem Material oder aus einem elektrisch nichtleitenden Material gefertigt, um Bauteile handeln kann, die ein selbstschneidendes Gewinde aufweisen, welches an der Außenseite des Verbindungsbauteiles insbesondere eines schraubenförmigen Verbindungsbauteiles, ausgebildet ist.

Lasern stellt ein heutzutage bewährtes Verfahren dar. Das Lasern ermöglicht die Erzeugung von Elektroden in beliebiger komplexer Struktur, die zueinander isoliert sind. Das Auslasern einer beliebigen Struktur, zum Beispiel eines Kreises als Elektrodenkreisfläche einerseits und dem Schraubenmaterial als Gegenelektrode andererseits, lässt den Ultraschallsensor entstehen. Eine Elektrode wird durch die ausgelaserte, zum Beispiel als Kreisfläche ausgebildete Fläche dargestellt, während die Gegenelektrode durch das Material des Verbindungsbauteiles dargestellt wird. Während mit dem vorstehend im Zusammenhang mit dem Stand der Technik skizzierten manuellen Maskierungsverfahren nur einfache Strukturen erzeugt werden können, lassen sich durch das Auslasern weit komplexere Geometrien aufweisende Strukturen, auch ganze Sensorarrays fertigen, die mit dem manuellen Maskierungsverfahren nicht hergestellt werden können. Insbesondere kann durch das Auslasern der mindestens einen Elektrode zur Herstellung des Ultraschallsensors dieser an die Struktur des Bauteils, so z.B. an die Geometrie eines Schrauben- oder Bolzen- oder Nietkopfes angepasst werden. Es lassen sich die verschiedensten Verbindungselemente, so z.B. Schrauben, Bolzen, Nieten oder Zuganker oder dergleichen, mit mindestens einem Ultraschallsensor an einer der Stirnseiten versehen. Anstelle eines Ultraschallsensors auf den Stirnseiten können auch Gruppen von Sensoren oder ganze Sensorarrays mittels des Auslasems von Elektroden erzeugt werden. So ist es insbesondere sehr einfach möglich, die Sensorstruktur, d.h. dessen Geometrie, in optimaler Weise an das Verbindungselement anzupassen. Durch das Auslasern der Elektrodenstrukturen komplexer Geometrie lassen sich auf Verbindungselementen mit Längs- oder Querbohrungen, wie z.B. Schrauben oder Hohlbolzen, Ultraschallsensoren aufbringen. Im Falle von hauptsächlich auf Scherung beanspruchten Bauteilen mit Längsbohrung wird aus einer ursprünglich ein kreisförmiges Aussehen aufweisenden Elektrode, die z.B. für Verbindungselemente ohne Durchgangsbohrung eingesetzt wird, eine Ringelektrode, die um die Bohrung herum angeordnet ist. Des Weiteren kann eine adaptierte Sensorstruktur dargestellt werden, so z.B. für Verbindungselemente, die zwei sich in Richtung der Achsen kreuzende Querbohrungen aufweisen. In diesem Falle kann durch das erfindungsgemäß vorgeschlagene Auslasern der Elektroden dafür Sorge getragen werden, dass die Ultraschallsensoren nicht oberhalb von sich kreuzenden Bohrungen im Material des Verbindungsbauteiles angeordnet sind, sondern dort, wo die Ausbreitung des Ultraschallsignals nicht durch Querbohrungen behindert wird, so dass der eingespeiste Ultraschallimpuls ein aussagekräftiges und auswertbares Echosignal liefert.

Durch einen derartigen Freiheitsgrad bei der Positionierung der Ultraschallsensoren kann der Laufweg der Ultraschallpuls in optimaler Weise gestaltet werden, so dass ein auswertbares Ultraschallechosignal erhalten wird. Werden die Ultraschallsensoren, in diesem Falle z.B. vier Ultraschallsensoren, derart auf der Stirnseite des zu messenden Bauteiles angebracht, dass die Querbohrungen den Laufweg des Ultraschallsignals nur geringfügig stören, so lässt sich ein auswertbares Echosignal erhalten. In diesem Falle sind die vier einzelnen Ultraschallsensoren elektrisch miteinander gekoppelt, so dass sich ein Gesamtsensor ergibt, der vier Einzelultraschallsensoren umfasst.

In Weiterführung dieses Gedankens kann aus einem derartigen Gesamtsensor ein Ultraschallsensor mit komplexen Sensorstrukturen geschaffen werden. Dabei können mehrere Sensorelemente matrixartig angeordnet werden. Die Einzelelemente der matrixartig angeordneten Ultraschallsensoren können einzeln angesteuert werden, aber auch zu Gruppen verschiedener Größe innerhalb verschiedener vorwählbarer Verbünde verschaltet sein.

Das Auslasern der Elektrodenschicht, d.h. die Erzeugung einer Sensorstruktur in derselben, vermeidet einen elektrischen Kurzschluss zwischen den Elektroden, die durch die ausgelaserten Flächen voneinander getrennt sind.

Eine im Schichtaufbau unter der Metallisierungsschicht liegende Schutzschicht wird von der Laserstrahlung nicht vollständig durchdrungen; diese wird vielmehr lediglich oberflächig abgetragen.

Im Wege des automatisierten Auslaserns erzeugte Elektroden in der Elektrodenschicht des Schichtaufbaus eines Verbindungsbauteiles halten den bisher geforderten Anforderungen an die Beständigkeit der Sensoren bezüglich einer Salzsprühnebelprüfung stand.

Beim Auslasern der mindestens einen Elektrode komplexer beliebiger Geometrie ist nach dem Abtragen der obersten Deckschicht dafür Sorge zu tragen, dass darunter liegende Schichten nicht geschädigt werden. Das Abtragungsverhalten beim Lasern ist abhängig vom Absorptionsvermögen der Metallisierung und der darunter liegenden Schutzschicht. Durch geeignete Auswahl der Laserwellenlänge und weiterer Parameter beim Lasern, kann bestimmten Schichteneigenschaften, z.B. dem Absorptionsvermögen Rechnung getragen werden. Erfindungsgemäß erfolgt das Auslasern der Elektroden derart, dass beim Auslasern in sich geschlossener Flächen der Laserstrahl nur einen Eintrittspunkt erzeugt, ohne nochmals umgesetzt zu werden. Die zu erzeugende Struktur entlang eines Verfahrweges wird in einem Arbeitsgang hergestellt. Dadurch lässt sich in vorteilhafter Weise erreichen, dass ein an den Eintrittspunkten des Laserstrahls kurzzeitig erhöhter Energieeintrag nur einmal auftritt. Beim Auslasern mittels des erfindungsgemäß vorgeschlagenen Verfahrens wird die Schädigung einer optional vorgesehenen Schutzschicht, welche die Piezoschicht überdeckt, vermieden, die Teil eines Dreischichtenaufbaus des Ultraschallsensors sein kann.

Wird, dem erfindungsgemäß vorgeschlagenen Verfahren folgend, eine Struktur, die Elektroden unterschiedlicher komplexer Geometrie erzeugt, dargestellt, so kann in einem weiteren Arbeitsgang eine zusätzliche Elektrode auf einer Stirnseite des Verbindungsbauteiles, an dem der Ultraschallsensor durch Auslasern hergestellt werden soll, ausgelasert werden. Diese Elektrode stellt ein Referenzelement dar. Durch diese optional gleichzeitig herstellbare zusätzliche Elektrode kann z.B. eine Temperaturmessung erfolgen. Bevorzugt liegt diese Elektrode in einem Bereich des Bauteiles, der nicht durch mechanische Spannungen beaufschlagt wird, welche das Messergebnis verfälschen könnten. Dazu eignet sich, um das Beispiel Schraubenköpfe zu nennen, die Stirnseite der Schrauben außerhalb der senkrechten Projektionsfläche des Schraubenschaftes.

### Kurze Beschreibung der Zeichnung

Anhand der Zeichnung wird die Erfindung nachstehend eingehender beschrieben.

Es zeigt:
- Figur 1: eine Vorrichtung zur Durchführung einer Ultraschallmessung an einem als Schraube ausgebildeten Verbindungsbauteil,
- Figur 2.1: einen in vergrößertem Maßstab dargestellten Schnitt durch einen dreischichtig ausgebildeten Aufbau des an der Oberseite des Verbindungsbauteiles ausgebildeten Ultraschallsensors,
- Figur 2.2: einen in vergrößertem Maßstab dargestellten Schnitt durch eine zweischichtig ausgebildeten Schichtaufbau des an der Oberseite des Verbindungsbauteiles ausgebildeten Ultraschallsensors,
- Figur 3: die Darstellung eines Verbindungsbauteiles mit einer Durchgangsbohrung und einem an der Stirnseite applizierten Ultraschallsensor mit Ringgeometrie,
- Figur 4: die Draufsicht auf die Stirnseite des Verbindungsbauteiles gemäß Figur 3,

- Figuren 5.1 und 5.2: Draufsicht und Seitenansicht eines Verbindungsbauteiles mit einem aus mehreren Einzelsensoren gebildeten Gesamtsensor,
- Figur 6: ein matrixartig angeordnetes Sensorarray,
- Figuren 7 und 8: eine Gegenüberstellung der Laserung einer Ringstruktur für die Erzeugung einer kreisrunden Elektrode mittels konzentrischer Kreise beziehungsweise einer Spiralbahn des Laserstrahls.

### Ausführungsvarianten

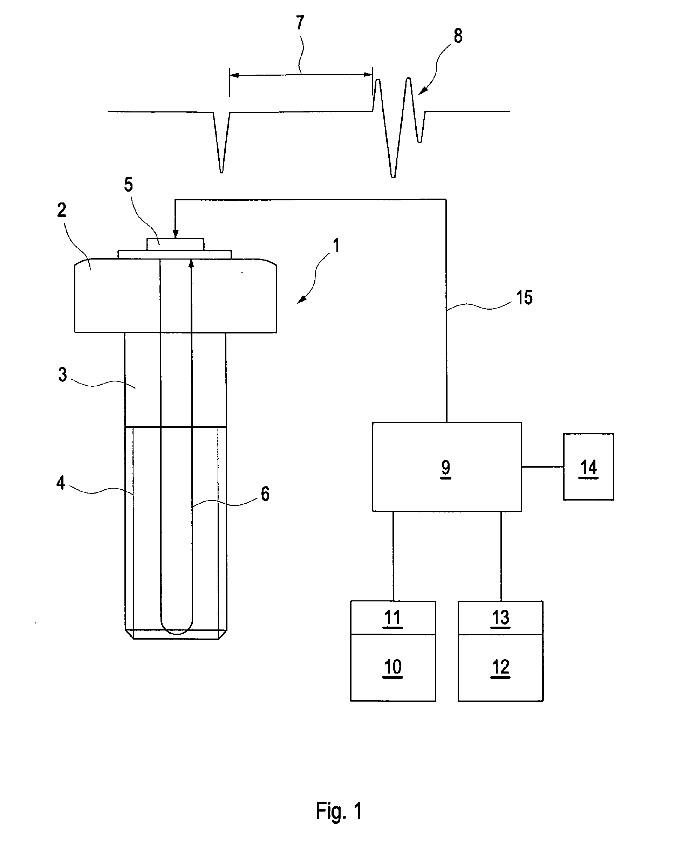

Aus der Darstellung gemäß Figur 1 geht ein Verbindungsbauteil, welches als Schraube ausgebildet ist, hervor. Außerdem kann das Verbindungsbauteil als Verbindungsbolzen mit einseitig oder an beiden Enden ausgebildetem Außengewinde oder dergleichen ausgeführt sein.

Das in Figur 1 dargestellte Verbindungsbauteil 1 umfasst einen Schraubenkopf 2 und einen Schaft 3. Unterhalb des Schaftes 3 erstreckt sich ein Gewindeteil 4, welches in ein dazu komplementäres Gewinde eines Bauteiles eingeschraubt oder mit einer Schraubenmutter versehen werden kann. Oberhalb des Schraubenkopfes 2 befindet sich ein Ultraschallsensor 5 für einen in das Verbindungsbauteil 1 einzukoppelnden Ultraschallpuls 7. Der am Ultraschallsensor 5 in das Verbindungsbauteil 1 eingekoppelte Ultraschallpuls 7 verläuft entlang eines Laufweges 6 durch das Verbindungsbauteil 1 und tritt an dem Ultraschallsensor 5 wieder aus dem Verbindungsbauteil 1 als elektrisches Ultraschallpuls-Echo 8 aus. Mit t ist die Zeit bezeichnet, die zwischen dem Eintritt des Ultraschallpulses 7 in das Verbindungsbauteil 1 und dem Austreten des Ultraschallpuls-Echos 8 aus dem Verbindungsbauteil 1 vergeht, d.h. die Laufzeit des Ultraschallsignals.

Bei Einkopplung des Ultraschallpulses 7 und zur Auskopplung des elektrischen Ultraschall-Echos 8 in das bzw. aus dem Verbindungsbauteil 1 erstreckt sich eine Signalübertragungsleitung 15, die als Koaxialkabel ausgebildet sein kann, mit einer der Signalübertragungsleitung 15 innewohnenden Impedanz zwischen dem Ultraschallsensor 5 und einem Ultraschallmessgerät 9. Das Ultraschallmessgerät 9 ist mit einem Rechner 14, bei dem es sich beispielsweise um einen PC handeln kann, verbunden. Ferner steht das Ultraschallmessgerät 9 mit einem Pulsgenerator 10 (arbitrary function generator, Arbiträrgenerator) in Verbindung, dem ein erster Leistungsverstärker 11 zugeordnet sein kann. Durch den Pulsgenerator 10 mit erstem Leistungsverstärker 11 werden die Ultraschallpulse 7 unter Zwischenschaltung des Ultraschallsensors 5 erzeugt. Zur Signalerfassung von aus dem Verbindungsbauteil 1 ausgekoppelten elektrischen Ultraschallpuls-Echos 8 dient ein Transientenrekorder 12, der einen Signalverstärker 13 umfassen kann. Zur Bestimmung der zur Zeit der Messung der Spannkraft vorliegenden Laufzeit in der Signalübertragungsleitung 15 und der Laufzeiten der Ultraschallsignale durch das elektronische Messgerät 9 wird Reflexion eines elektrischen Anregungssignals am Ende (beim Ultraschallsensor 5) der Signalübertragungsleitung 15 genutzt.

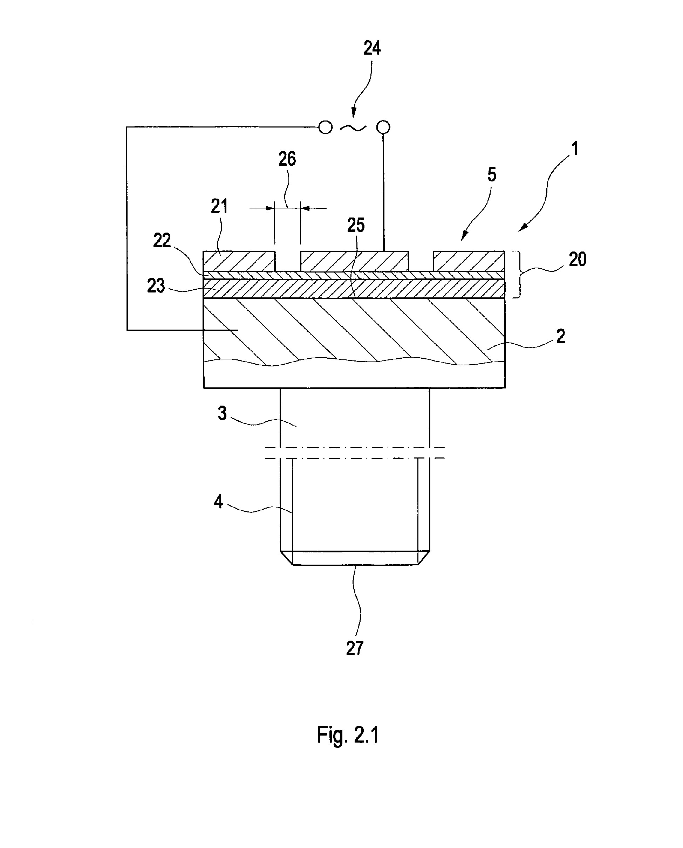

Aus der Darstellung gemäß Figur 2.1 geht das Verbindungsbauteil ohne Auswerteperipherie, jedoch mit integriertem Ultraschallsensorelement in vergrößertem Maßstab hervor.

Das in Figur 2.1 dargestellte Verbindungsbauteil 1 ist bevorzugt als Schraube ausgeführt. Daneben kann das Verbindungsbauteil 1 auch als Bolzen, als Stift oder als Niet oder dergleichen ausgebildet sein. Das Verbindungsbauteil 1 umfasst an einem oder beiden Enden einen schaftförmigen Abschnitt 3, an dem ein Gewinde 4 ausgebildet ist. Auf einem ersten Ende 25, welches die Stirnseite eines Schraubenkopfes 2 darstellt, befindet sich der Ultraschallsensor 5, der in einem Schichtaufbau 20 ausgeführt ist. Der Schichtaufbau 20 umfasst z.B. drei Schichten, wobei unmittelbar auf das erste Ende 25, d.h. die Stirnseite des Schraubenkopfes 2, eine Schicht 23 aus einem piezoelektrische Eigenschaften aufweisenden Material aufgesputtert ist. Das Aufsputtern der Schicht 23 erfolgt in einer Schichtdicke von wenigen µm. Auf die Schicht 23 ist eine mechanische Schutzschicht 22 aufgesputtert, deren Schichtdicke geringer ist als die Schicht der darunterliegenden Schicht 23 aus einem piezoelektrische Eigenschaften aufweisenden Material. Schließlich umfasst der Schichtaufbau 20 gemäß der Darstellung in Figur 2.1 mindestens eine Elektrodenschicht 21. Innerhalb der Elektrodenschicht 21 sind einzelne Elektroden voneinander isoliert, angedeutet durch einen Abstand 26, der eine Ringstruktur darstellt. In einer ersten Ausführungsvariante kann der in Figur 2.1 im Schnitt dargestellte Schichtaufbau eine Elektrodenschicht aus Sn, eine mechanische Schutzschicht 22 aus CrO sowie eine piezoelektrische Eigenschaften aufweisende piezoelektrische Schicht 23, die bevorzugt als Dünnfilm in einer Schichtdicke von wenigen µm ausgebildet ist, aufweisen. In einer weiteren Ausführungsvariante des in der Darstellung gemäß Figur 2.1 im Schnitt dargestellten Ultraschallsensors 5 kann der Schichtaufbau 20 auch - wie in der ersten Ausführungsvariante - eine Elektrodenschicht 21 aus Titan umfassen, wobei jedoch die mechanische Schutzschicht 22 aus SiN, Siliciumnitrit, beschaffen ist und die piezoelektrische Eigenschaften aufweisende piezoelektrische Schicht 23 als ZnO-Schicht ausgebildet ist. Anstelle eines Dreischichtenaufbaus kann der Schichtaufbau 20 jedoch auch lediglich zwei Schichten aufweisen, wenn die mechanische Schutzschicht 22 weggelassen wird und der Schichtaufbau 20 lediglich die Elektrodenschicht 21 und die aus piezoelektrische Eigenschaften aufweisendem Material gefertigte piezoelektrische Schicht 23 umfasst.

Der in Figur 2.1 dargestellte Ultraschallsensor 5, ausgebildet als Schichtaufbau 20, kann auch an einem zweiten Ende 27 des Verbindungsbauteiles 1, welches ebenfalls frei zugänglich ist, aufgesputtert sein.

Was in Figur 2.1 exemplarisch am Beispiel eines als Schraube ausgebildeten Verbindungsbauteiles 1 dargestellt ist, lässt sich auch an einem Verbindungsbauteil 1 durchführen, welches als Bolzen, als Niet oder als Stift ausgeführt ist.

Der erfindungsgemäß vorgeschlagene, im Verbindungsbauteil 1 integrierte Ultraschallsensor 5 im Schichtaufbau 20 zeichnet sich durch eine sehr hohe Adhäsion z.B. an dem als Stirnseite ausgebildeten ersten Ende 25 des Verbindungsbauteiles 1 aus. Aufgrund der hohen Adhäsionskraft von 20 N/mm² und mehr, sind sämtliche Ankoppelfehler, welche die Signallaufzeit zwischen dem Ultraschallsensor 5 und dem Verbindungsbauteil 1 beeinträchtigen könnten, eliminiert. Dadurch lässt sich eine erheblich genauere Signallaufzeitmessung und damit eine wesentlich genauere Ermittlung der Vorspannkraft bzw. der Spannkraft des Verbindungsbauteiles 1 erreichen. Das Verbindungsbauteil 1 kann aus der Gruppe der nachfolgend ausgeführten Werkstoffe gefertigt werden: hochlegierte Stähle, Sonderstähle, Titan und seine Legierungen, insbesondere TiAl6V4, sowie Aluminium und seine Legierungen, ferner Messing, Inconel (Nickellegierung) sowie Stähle wie z.B. A286, die amagnetisch sind, sowie alle Materialien, die Ultraschall in hinreichender Stärke passieren lassen und in denen auswertbare Echostrukturen entstehen.

Wird das Verbindungsbauteil 1 aus einem nichtleitenden Werkstoff, so zum Beispiel Kunststoff oder einer Keramik, gefertigt, so ist ein derartiges Verbindungsbauteil 1 in einem ersten zusätzlichen Beschichtungsschritt mit einer Metallisierungsschicht zu versehen, um die Bauteilmasse zu erzeugen.

Da jede Schicht 21, 22, 23 innerhalb des Schichtaufbaus 20, d.h. die mindestens eine Elektrodenschicht 21, die mindestens eine mechanische Schutzschicht 22 und die mindestens eine piezoelektrische Schicht 23, im Wege der Sputtertechnik aufgebracht ist, herrschen zwischen den einzelnen Schichten 21, 22, 23 des Schichtaufbaus 20 jeweils hohe Adhäsionskräfte. Dies gilt nicht nur für die Kontaktseite der Schicht 23 aus einem piezoelektrische Eigenschaften aufweisenden Material und dem ersten Ende 25 des Verbindungsbauteiles 1, sondern auch zwischen den Schichten 21, 22, 23. Eine Isolation von Einzelelektroden innerhalb der Elektrodenschicht 21 erfolgt vorzugsweise durch die Lasertechnik, wobei ein Laserstrahl, wie nachfolgend eingehender beschrieben wird, in einer ersten Ausführungsmöglichkeit in konzentrischen Kreisen über das erste Ende 25, so z.B. die Stirnseite eines Schraubenkopfes 2 geführt werden kann als auch in einer Spiralbahn.

Bevorzugt übersteigt die Dicke der Schicht 23 aus dem Material mit piezoelektrischen Eigenschaften die Dicke der mechanischen Schutzschicht 22 um ein Mehrfaches.

Bei der Elektrodenschicht 21, in die mittels des Laserverfahrens die beispielsweise in Ringform ausgebildete Elektrodenstruktur eingelasert wird, können folgende Materialien gewählt werden: In einer ersten Ausführungsmöglichkeit Metalle mit oder ohne Stickstoff, z.B. Titan und TiN oder dergleichen sowie Chrom und CrN, oder in einer weiteren Ausführungsform metallische Legierungen wie z.B. NiCr. Bei der Wahl des Materials, aus welchem die Elektrodenschicht 21 des Schichtaufbaus 20 des Ultraschallsensors 5 gefertigt werden wird, werden bevorzugt Elemente der Gruppen IV, IVb, VIb, VIIIb, Ib, so z.B. Sn, Ag, Ti oder andere metallische Verbindungen untereinander, so z.B. NiCr eingesetzt, sowie weitere elektrodenfähige Materialien.

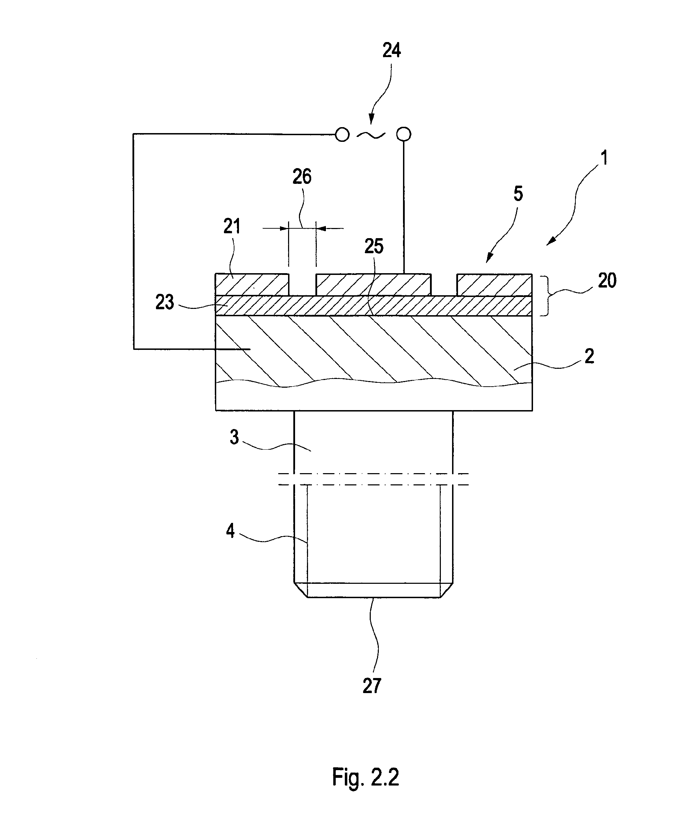

Aus der Darstellung gemäß Figur 2.2 geht ein zweischichtiger Schichtaufbau eines Ultraschallsensors hervor.

Bei Verwendung geeigneter, temperaturstabiler und umweltresistenter Materialien für die Piezoschicht, kann auf die Schutzschicht verzichtet werden. In diesem Falle stellt sich der Ultraschallsensor 5 als zweischichtiger Aufbau 20 dar, mit einer Elektrodenschicht 21 und eben dieser aus temperaturstabilem und umweltresistentem Piezomaterial gefertigte Schicht 23 mit piezoelektrischen Eigenschaften.

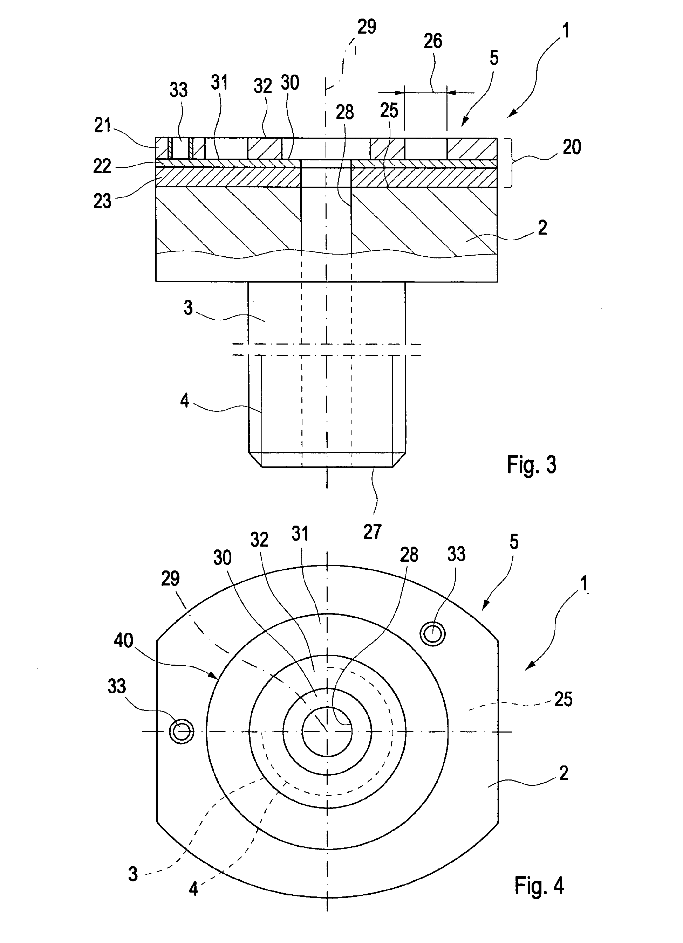

Figur 3 ist ein Verbindungsbauteil mit einer Durchgangsbohrung zu entnehmen, wobei auf einer der Stirnseiten des Verbindungsbauteiles der Ultraschallsensor angeordnet ist.

Figur 3 zeigt, dass das Verbindungsbauteil 1 unterhalb des Schraubenkopfes 2 einen Schaft 3 umfasst, der in ein Gewinde 4 übergeht. Auf einer ersten Stirnseite 25 des Verbindungsbauteiles 1 ist der Ultraschallsensor 5 angeordnet. Die weitere, zweite Stirnseite des Verbindungsbauteiles 1 gemäß der Darstellung in Figur 3, ist durch Bezugszeichen 27 identifiziert. Die Durchgangsbohrung 28 ist symmetrisch zur Achse 29 ausgebildet. Auf der ersten Stirnseite 25 des hier als Schraube ausgebildeten Verbindungsbauteiles 1 befindet sich der Schichtaufbau 20 des Ultraschallsensors 5, mit Elektrodenschicht 21, mit mechanischer Schutzschicht 22 und mit piezoelektrischer Schicht 23. Figur 3 zeigt, dass auf der ersten Stirnseite 25 des Verbindungsbauteiles 1 um die Durchgangsbohrung 28 herum ein erster ausgelaserter Bereich 30 erzeugt ist, der von einem diesen konzentrisch umgebenden zweiten ausgelaserten Bereich 31 umgeben ist. Zwischen den ausgelaserten Bereichen 30, 31 verbleibt eine metallische Ringelektrode 32.

Der Draufsicht gemäß Figur 4 ist der zweite ausgelaserte Bereich 31 zu entnehmen. Beim Auslasern wird der erste ausgelaserte Bereich 30 und der zweite ausgelaserte Bereich 31 in einer Aufspannung des Verbindungsbauteiles 1 erzeugt. Das Auslasern der in sich geschlossenen Flächen erfolgt bevorzugt in einem Arbeitsgang, mittels einer kontinuierlichen Laserspur ohne Sprünge des Laserstrahls, so dass eine Schädigung der piezoelektrischen Schicht 23 und der diese gegebenenfalls überdeckenden Schutzschicht 22 beim Auslasern der Bereiche 30, 31 vermieden werden kann. Wird eine weitere Elektrodenstruktur als Referenzelement ausgelasert, so wird diese insbesondere auf einem nicht durch mechanische Spannungen beanspruchten Teil des Verbindungsbauteiles 1, d.h. auf der nicht durch Kräfte beaufschlagten ersten Stirnseite 25 des Verbindungsbauteiles 1, ausgebildet. Über diese weitere Elektrodenstruktur kann in vorteilhafter Weise eine Temperaturmessung mittels Ultraschall erfolgen. Durch das Erzeugen dieser weiteren Elektrodenstruktur auf der ersten Stirnseite 25 des Verbindungsbauteiles 1 - hier schraubenförmig ausgebildet - ist eine Entkopplung der Temperaturmessung von der Axialkraftmessung gegeben.

Aus Figur 4 geht hervor, dass bei dem dort dargestellten Verbindungsbauteil 1 sich am Schraubenkopf 2 Referenzelemente 33 befinden, die für die Temperaturmessung mittels Ultraschall verwendet werden können.

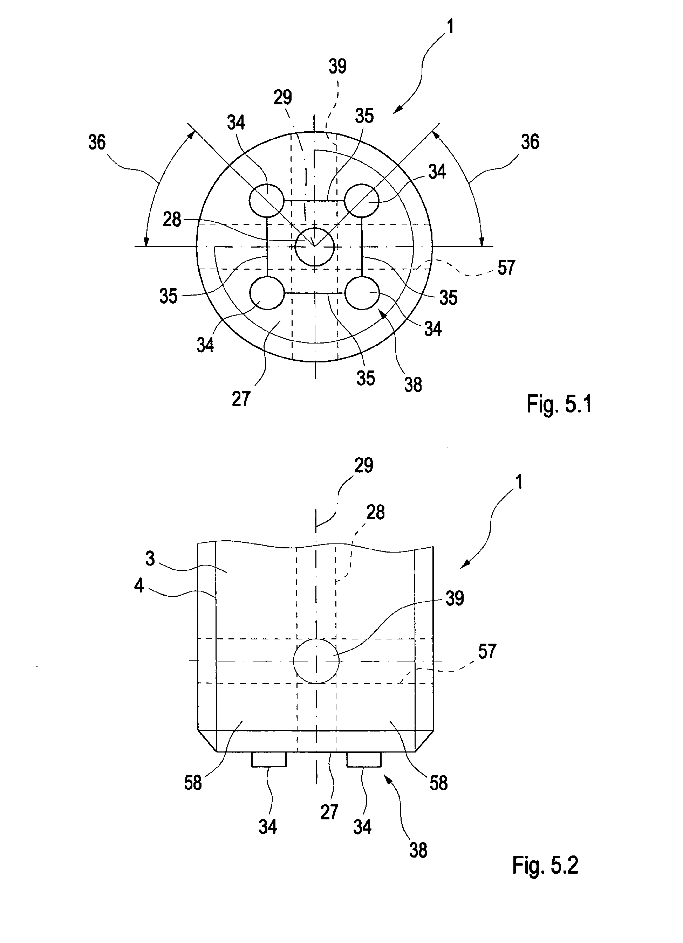

Den Darstellungen gemäß der Figuren 5.1 und 5.2 ist eine weitere Ausführungsmöglichkeit eines Ultraschallsensors zu entnehmen, der als Gesamtsensor mehrere Einzelsensoren umfassend ausgeführt ist.

Wie der Draufsicht gemäß Figur 5.1 auf die zweite Stirnseite 27 des Verbindungsbauteiles 1 entnommen werden kann, befinden sich auf der zweiten Stirnseite 27 mehrere Einzelsensoren 34. Die Einzelsensoren 34, hier vier an der Zahl, bilden miteinander einen Gesamtsensor 38. Die Einzelsensoren 34 sind jeweils mit elektrischen Kopplungen 35 miteinander verbunden. Aus der Draufsicht gemäß Figur 5.1 geht hervor, dass die Einzelsensoren 34 in einem Winkel 36 in Bezug auf die Horizontale angeordnet sind. Der Teilungswinkel 36 bzw. die Anordnung der einzelnen Sensoren 34 ist so gewählt, dass diese stets in dem Bereich angeordnet sind, in dem sich in der Zeichenebene liegend noch genug Material befindet. Dies ist insbesondere in den Bereichen der Fall, die nicht an einer ersten Querbohrung 39 bzw. einer diese kreuzenden zweiten Querbohrung 57 durchzogen sind. Wie Figur 5.1 zeigt, liegen die Einzelsensoren 34 des Gesamtsensors 38 insbesondere in einem Winkel von ca. 45° bezogen auf die Horizontale angeordnet, so dass sämtliche Einzelsensoren 34 stets zwischen den einzelnen Abschnitten der Querbohrungen 39, 57 liegen. Dies ist insbesondere der Darstellung gemäß Figur 5.2 zu entnehmen, bei der die erste Querbohrung 39 in der Zeichenebene liegt, während die dazu senkrecht verlaufende zweite Querbohrung 57 dazu in einem Winkel von 90° verläuft. Die auf der zweiten Stirnseite 27 befindlichen Einzelsensoren 34 sind so angeordnet, dass diese stets über einer Materialbrücke 58 des Verbindungsbauteiles 1 liegen, so dass - wie in Figur 1 bereits dargestellt - ein zuverlässiger Schallpfad 6 ausgebildet wird.

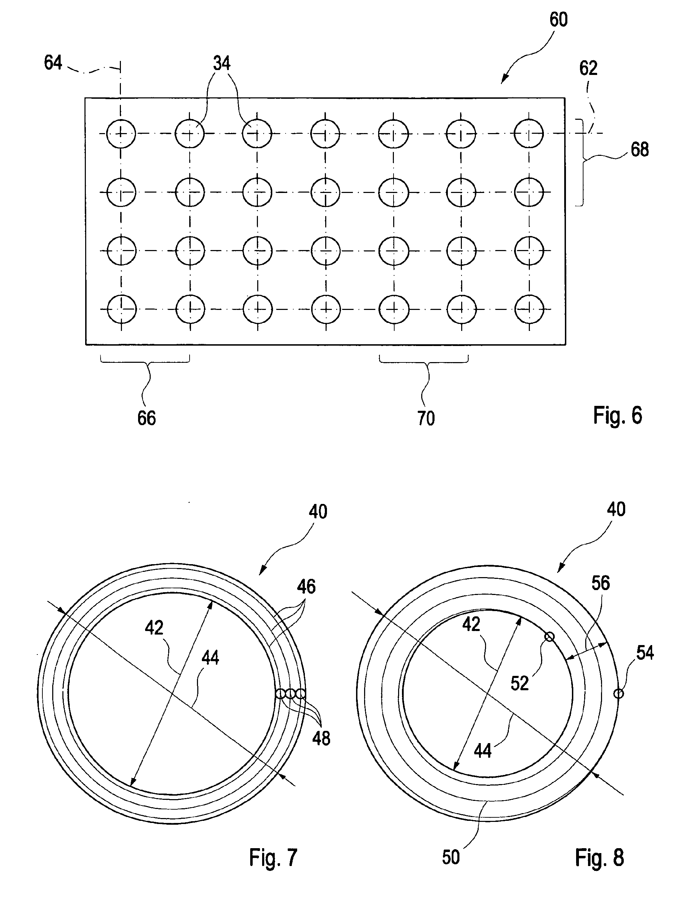

Alternativ zur Darstellung gemäß der Figuren 5.1 und 5.2, bei der ein Gesamtsensor mehrere einzelne Sensoren umfasst, lässt sich der Darstellung gemäß Figur 6 ein Ultraschallsensorarray entnehmen. Ein Sensorarray 60 umfasst mehrere Einzelsensoren 34. Diese sind entlang einer ersten Achse 62 bzw. entlang einer zweiten Achse 64 auf einem Trägersubstrat angeordnet. Bei dieser Ausführungsvariante können z.B. einzelne Verbunde 66, 68, 70 von mehreren entweder auf einer Achse 62 oder auch auf beiden Achsen 62, 64 liegende Einzelsensoren 34 separat angesteuert und bestromt werden, so dass mit dem Sensorarray 60 gemäß der Darstellung in Figur 6 an beliebigen Stellen Ultraschallsignalmessungen vorgenommen werden können.

Die Einzelsensoren 34 sind unabhängig voneinander ansteuerbar, so dass sich an beliebigen Stellen eines Werkstücks eine Ultraschallmessung vornehmen lässt. Sie können aber auch zu beliebigen Gruppen zusammengeschaltet werden.

Aus der Darstellung gemäß der Figuren 7 und 8 lässt sich entnehmen, dass eine Ringstruktur 40 zur Trennung einer ersten Elektrode 60 von einer zweiten Elektrode 62 an einem ersten Ende 25 des Verbindungsbauteiles 1 sowohl durch mehrere konzentrisch verlaufende Bahnen 46 des Laserstrahles als auch durch eine einzige Spiralbahn 50 des Laserstrahles erzeugt werden kann. Aus der Darstellung gemäß der Figuren 7 und 8 geht hervor, dass bei konzentrischen Bahnen 46 eine Anzahl von Aufsatzpunkten 48, an denen der Laserstrahl sowohl ein- als auch wieder austritt, erzeugt werden. Dies geht mit dem Nachteil einher, dass bei konzentrischen Bahnen 46 jeweils deren Anfang und deren Ende vom Laserstrahl überstrichen werden, mithin dort ein erhöhter Materialabtrag, der sich bis in die mechanische Schutzschicht 22 erstrecken kann, erfolgt. Die Materialabträge an der mechanischen Schutzschicht 22 sind tolerierbar, jedoch ist zu vermeiden, dass aufgrund einer zu hohen Eindringtiefe der Laserstrahlen des Laserkopfes die piezoelektrische Dünnschicht 23 freigelegt bzw. beschädigt wird.

Während die in den Figuren 7 und 8 dargestellte konzentrische Bahn 46 des Laserstrahles zu diskret voneinander getrennten Bahnen innerhalb der Ringstruktur 40 führt, stellt sich bei einem in Spiralform 50 verlaufenden Bearbeitungsweg des Laserstrahles eine kontinuierliche, unterbrechungsfreie Bahn ein. Dies bedeutet, dass wie aus der Darstellung gemäß Figur 5 hervorgeht, eine Ringstruktur 40 in einer Ringbreite 56 erzeugt wird, die genau einen Eintrittspunkt 52 und genau einen Austrittspunkt 54 umfasst. Dies ist insbesondere deswegen bedeutsam, da durch die in den Figuren 7 und 8 dargestellten konzentrischen Führung 46 bzw. der in Spiralform erfolgenden Führung des Laserstrahles ein lokal zu hoher Energieeintrag und damit eine Schädigung der Schutzschicht 22 oder gar der darunter liegenden Piezoschicht 23 vermieden wird, so dass durch die erfindungsgemäß vorgeschlagene Lösung ein Verfahren zur halbautomatischen oder vollautomatischen Erzeugung von Ultraschallsensoren in Großserienfertigung bereitgestellt ist. Dem Auslasern von Ringstrukturen mittels einer Spiralbahn 50 des Laserstrahls ist gegenüber einem Auslasern von Ringstrukturen in konzentrischen Kreisen der Vorzug zu geben.

### Bezugszeichenliste

- 1: Verbindungsbauteil
- 2: Kopf
- 3: Schaft für Gewindeteil
- 4: Gewinde
- 5: Ultraschallsensor
- 6: Schallpfad
- 7: Laufzeit Ultraschallsignal zwischen Ein- und Auskopplung aus Verbindungsbauteil 1
- 8: Ultraschallpulsecho
- 9: elektronisches Ultraschallmessgerät
- 10: Pulsgenerator
- 11: Leistungsverstärker
- 12: Transientenrekorder
- 13: Signalverstärker
- 14: Rechner
- 15: Signalübertragung
- 20: Schichtaufbau Ultraschallsensor 5
- 21: Elektrodenschicht (1. Schicht)
- 22: mechanische Schutzschicht (2. Schicht)
- 23: piezoelektrische Schicht (3. Schicht)
- 24: elektrische Kontaktierung
- 25: erstes Ende (Stirnseite Kopf 2)
- 26: Abstand Einzelelektroden
- 27: zweites Ende
- 28: Durchgangsbohrung
- 29: Achse
- 30: erster ausgelaserter Bereich
- 31: zweiter ausgelaserter Bereich
- 32: metallische Ringelektrode

- 33: Referenzelement
- 34: Einzelsensor
- 35: elektrische Kopplung
- 36: Teilungswinkel
- 38: Gesamtsensor
- 39: erste Querbohrung

- 40: Ringstruktur
- 42: Innendurchmesser
- 44: Außendurchmesser
- 46: konzentrische Bahn Laserstrahl
- 48: Aufsatzpunkte konzentrische Bahn
- 50: Spiralbahn Laserstrahl
- 52: diskreter Eintrittspunkt
- 54: diskreter Austrittspunkt
- 56: Breite der Ringstruktur 40
- 57: zweite Querbohrung
- 58: Materialbrücke
- 60: Sensorarray
- 62: erste Achse
- 64: zweite Achse
- 66: erster Verbund
- 68: zweiter Verbund
- 70: weiterer Verbund

## Patentansprüche

1. Verbindungsbauteil (1) mit integriertem Ultraschallsensor (5) zur Analyse der mechanischen Spannungsverteilung, insbesondere zur Bestimmung der Vorspannkraft des Verbindungsbauteiles (1), wobei der Ultraschallsensor (5) einen zumindest zweischichtigen Schichtaufbau (20) mit einer Elektrodenschicht (21) und mindestens einer Schicht (23) aus einem Material mit piezoelektrischen Eigenschaften aufweist, **dadurch gekennzeichnet, dass** die Elektrodenschicht (21), und die Schicht (23) aus einem Material mit piezoelektrischen Eigenschaften an mindestens einem frei zugänglichen Ende (25, 27) des Verbindungsbauteiles (1) aufgedampft, insbesondere aufgesputtert sind und in der Elektrodenschicht (21) Strukturen (40, 46, 50) durch Erzeugung ausgelaserter Bereiche (30, 31) ausgebildet sind.

2. Verbindungsbauteil gemäß Anspruch 1, **dadurch gekennzeichnet, dass** die Schichten (21, 23) des mindestens zweischichtigen Schichtaufbaus (20) eine hinreichende Adhäsionskraft aufweisen.

3. Verbindungsbauteil gemäß Anspruch 1, **dadurch gekennzeichnet, dass** die Schicht (23) aus einem piezoelektrische Eigenschaften aufweisenden Material mit einer hinreichenden Adhäsionskraft auf ein erstes Ende (25) und/oder ein zweites Ende (27) des Verbindungsbauteils (1) aufgebracht ist.

4. Verbindungsbauteil gemäß Anspruch 1, **dadurch gekennzeichnet, dass** der mindestens zweischichtige Schichtaufbau (20) mindestens eine Elektrodenschicht (21), eine mechanische Schutzschicht (22) sowie mindestens eine Schicht (23) aus einem Material mit piezoelektrischen Eigenschaften aufweist.

5. Verbindungsbauteil gemäß Anspruch 1, **dadurch gekennzeichnet, dass** der integrierte Ultraschallsensor (5) an dem frei zugänglichen ersten Ende (25) des Verbindungsbauteils (1) auf eine Fläche aufgebracht ist, die konkav, konvex, plan- oder wellenförmig sowie aus Kombinationen daraus geformter Flächen aufgebracht ist.

6. Verbindungsbauteil gemäß Anspruch 1, **dadurch gekennzeichnet, dass** die Struktur (40) mindestens einen konzentrisch ausgelaserte Kreis (46) umfasst.

7. Verbindungsbauteil gemäß Anspruch 1, **dadurch gekennzeichnet, dass** die Struktur (40) in Form einer kontinuierlichen unterbrechungsfreien Bahn (50) ausgelasert ist.

8. Verbindungsbauteil gemäß Anspruch 7, **dadurch gekennzeichnet, dass** die Bahn (50) mindestens einen Eintrittspunkt (52) sowie mindestens einen Austrittspunkt (54) eines Laserstrahles aufweist.

9. Verbindungsbauteil (1) gemäß Anspruch 1, **dadurch gekennzeichnet, dass** an zumindest einer Stirnseite (25, 27) ein mehrere Einzelsensoren (34) umfassender Gesamtsensor (38) angeordnet ist.

10. Verbindungsbauteil (1) gemäß Anspruch 9, **dadurch gekennzeichnet, dass** die Einzelsensoren (34) des Gesamtsensors (38) elektrisch miteinander gekoppelt sind.

11. Verbindungsbauteil (1) gemäß Anspruch 9, **dadurch gekennzeichnet, dass** die Einzelsensoren (34) des Gesamtsensors (38) auf zumindest einer Stirnseite (25, 27) des Verbindungsbauteils (1) in einem Teilungswinkel (36) angeordnet sind, derart, dass die Einzelsensoren (34) über Materialbrücken (58) des Verbindungsbauteils (1) liegen, die einen optimalen Schallpfad (6) für die Ultraschallsignale bieten.

12. Verbindungsbauteil (1) gemäß Anspruch 1, **dadurch gekennzeichnet, dass** Einzelsensoren (34) als Ultraschallsensorarray (60) angeordnet sind, die entlang einer ersten Achse (62) und/oder einer zweiten Achse (64) orientiert sind, und die in beliebigen Verbünden (66, 68, 70) ansteuerbar sind.

13. Verfahren zur Herstellung eines Verbindungsbauteiles (1) mit integriertem Ultraschallsensor (5, 34, 38, 60), gemäß einem oder mehrerer der vorhergehenden Ansprüche, **dadurch gekennzeichnet, dass** auf zumindest einer Stirnseite (25, 27) des Verbindungsbauteiles (1) Strukturen für mindestens eine Elektrode (30, 31, 32) beliebiger Form ausgelasert werden.

14. Verfahren gemäß Anspruch 13, **dadurch gekennzeichnet, dass** zumindest zwei ausgelaserte Bereiche (30, 31) für die Erzeugung der Strukturen zumindest einer Elektrode in beliebiger Struktur (40) durch den Laserstrahl jeweils kontinuierlich in einem Arbeitsgang hergestellt werden.

15. Verfahren gemäß Anspruch 13, **dadurch gekennzeichnet, dass** das Auslasern der Strukturen (30, 31) zur Erzeugung der Elektroden in beliebiger Form (40) derart erfolgt, dass nach dem Abtragen einer metallischen Schicht (21) eine darunter liegende Schicht (23) aus einem Material mit piezoelektrischen Eigenschaften beziehungsweise die Schutzschicht (22) durch die Intensität der Laserstrahlung minimal jedoch bevorzugt nicht geschädigt werden.

16. Verfahren gemäß Anspruch 13, **dadurch gekennzeichnet, dass** die Wellenlänge der Laserstrahlung und weiterer Laserparameter, wie zum Beispiel die Pulsfrequenz, auf das Absorptionsvermögen der Schichten (21, 23) des mindestens zweischichtigen Schichtaufbaus (20) des Ultraschallsensors (5) abgestimmt sind.

17. Verfahren gemäß Anspruch 13, **dadurch gekennzeichnet, dass** auf zumindest einer Stirnseite (25, 27) des Verbindungsbauteiles (1) außerhalb eines durch mechanische Spannungen beanspruchten Bereiches eine weitere ausgelaserte Struktur (32) erzeugt wird, über die eine Temperaturmessung mittels Ultraschall erfolgt.

18. Verfahren gemäß Anspruch 13, **dadurch gekennzeichnet, dass** die Einzelsensoren (34) eines Sensorarrays (60) unabhängig voneinander in frei definierbaren Verbünden (66, 68, 70) entlang einer ersten Achse (62) und/oder einer zweiten Achse (64) angesteuert werden.

19. Verwendung des Verbindungsbauteils gemäß einer oder mehrerer der Ansprüche 1 bis 12 zur Analyse der mechanischen Spannungsverteilung und deren Asymmetrien in einem Verbindungsbauteil (1).
